# EUROPEAN PATENT APPLICATION

(11) **EP 1 773 056 A2**
(43) Date of publication of application: **11.04.2007**
(21) Application number: 06121971.3
(22) Date of filing: 09.10.2006
(51) Int. Cl.: H04N 7/173

(54) **Apparatus and method for providing VOD service**

(30) Priority: 10.10.2005 KR 20050095046
(71) Applicant: LG Electronics Inc., Yongdungpo-gu Seoul (KR)
(72) Inventor: Ryoo, Seung Ho, Gwangjin-gu, Seoul 143-773 (KR)
(74) Representative: Meissner, Bolte & Partner

(57) **Abstract**

An apparatus and method for providing video on demand (VOD) service are disclosed, in which a transmission frequency of a program per channel is updated to detect transport stream identifier even in case that the transmission frequency is varied. The method for providing VOD service of a receiving system includes updating a channel map if a transmission frequency included in received service information is varied; and extracting and storing transport stream identifier by scanning a transmission frequency band of the channel map.

## Description

This application claims the benefit of Korean Application No. 10-2005-0095046, filed on October 10, 2005, which is hereby incorporated by reference as if fully set forth herein.

### BACKGROUND OF THE INVENTION

### Field of the Invention

The present invention relates to an apparatus and method for providing video on demand (VOD) service, and more particularly, to a method for detecting a transport stream identifier.

### Discussion of the Related Art

Generally, a video on demand (VOD) service allows a user to view corresponding VOD contents at a desired time. That is, if the user requests desired VOD contents using a user terminal, such as computer, set top box and TV, which enables bi-directional communication, a VOD server having a plurality of VOD contents in a data base retrieves the requested VOD services and transmits the retrieved VOD services to the user terminal to allow the user to view them. The VOD server stores various VOD contents such as movies in the data base by using video compression techniques. The VOD contents may include audio and data in addition to video.

Since the VOD service allows the user to select desired VOD contents at a desired time unlike the existing TV, it may be regarded as a kind of an interactive TV. The VOD service can be divided into a real VOD (RVOD) service, a subscription VOD (SVOD) service, and a free on demand (FOD) service, wherein the RVOD service allows users to pay a fixed fee per program, the SVOD service allows users to pay monthly subscription to a package of programs regardless of the number of the programs, and the FOD service is provided as a marketing means free of charge.

A receiving party should know a transport stream identifier (TSID) to use the VOD service, wherein the TSID serves as position information of a receiving system, such as a set top box, which desires to use the VOD service. In other words, this is because that the VOD server corresponding to a transmitting party transmits the VOD service having TSID available for a corresponding set top box if the set top box requests the VOD service.

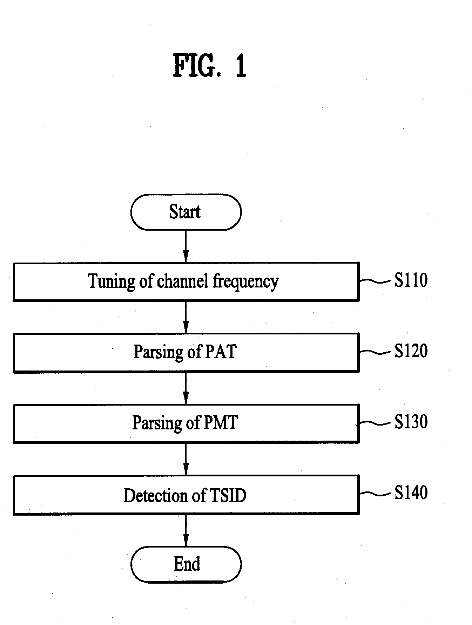

As one example of related art methods for detecting TSID, there is a method for detecting TSID by scanning a transmission frequency allocated to a program if a booting signal is input. This method is available because the set top box previously stores transmission frequencies of programs per channel by hard coding. In this method, the TSID is detected by sequentially performing tuning, parsing of a program association table (PAT), and parsing of a program map table (PMT), as shown in FIG. 1.

FIG. 1 illustrates one example of a related art method for detecting TSID. In other words, a channel frequency for transmission of a program is tuned (S110). Then, parsing of the PAT from the channel frequency is performed in accordance with the tuned result (S120). The PAT is service information transmitted by a packet having a packet identifier (PID) of '0' , and transmits PID information of a corresponding PMT to each program. The PMT transmits PID information of a transport stream packet to which an individual bit row of video and audio constituting a program identification number and a program is transmitted, and PID information to which program clock reference (PCR) is transmitted. Thus, parsing of a corresponding PMT is performed using program_map_PID in the parsed PAT (S130).

At this time, since the PAT parsed in the step S120 has information of the TSID, the TSID allocated to the channel frequency is detected by using the PAT (S140).

However, the related art method for detecting TSID has a problem. That is, if the PMT exists in a transmission frequency band, since PMT, which is not required to detect the TSID, should be parsed, much time is required to detect the TSID.

Also, since the related art set top box stores the transmission frequency of a program per channel by hard coding, if the transmission frequency is varied, the TSID of the transmission frequency cannot be detected. For this reason, a problem occurs in that the set top box cannot use the VOD service.

### SUMMARY OF THE INVENTION

Accordingly, the present invention is directed to an apparatus and method for providing VOD service, which substantially obviate one or more problems due to limitations and disadvantages of the related art.

An object of the present invention is to provide an apparatus and method for detecting TSID, in which a transmission frequency of a program per channel is updated to detect the TSID even in case that the transmission frequency is varied.

Another object of the present invention is to provide an apparatus and method for detecting TSID, in which parsing of a PMT is omitted to quickly the TSID from a PAT.

Other object of the present invention is to provide an apparatus and method for detecting TSID, in which a transmitting system directly detects the TSID using identification information of a receiving system to transmit VOD service to the corresponding receiving system.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for providing video on demand (VOD) service of a receiving system, according to one embodiment of the present invention, includes updating a channel map if a transmission frequency included in received service information is varied; and extracting and storing transport stream identifier (TSID) by scanning a transmission frequency band of the channel map.

In another aspect of the present invention, an apparatus for providing VOD service, includes a receiving system updating a channel map if a transmission frequency included in received service information is varied, and extracting a transport stream identifier (TSID) by scanning a transmission frequency band of the channel map if a previously set condition is satisfied; a VOD server outputting VOD contents requested from the receiving system; a service information generator generating service information for decoding the VOD contents; and a transmitter modulating the VOD contents output from the VOD server and transmitting the modulated VOD contents to the receiving system through a transmission network.

In other aspect of the present invention, an apparatus for providing VOD service, includes a receiving system having a cable modem, transmitting previously allocated identification information through a cable modem, and requesting VOD contents; a CMTS acquiring identification information of the receiving system and a transport stream identifier available for the receiving system through communication with the cable modem of the receiving system; a VOD server storing the identification information and the transport stream identifier acquired by the CMTS and outputting the VOD contents requested from the receiving system and corresponding transport stream identifier; a service information generator generating service information for decoding the VOD contents; and a transmitter modulating the VOD contents output from the VOD server into a transmission frequency of a corresponding transport stream identifier and transmitting the modulated transmission frequency to the receiving system through a transmission network.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is an operation flow chart illustrating a related art method for detecting TSID for VOD service;

FIG. 2 is a block diagram illustrating a system for VOD service according to one embodiment of the present invention;

FIG. 3 illustrates one example of a syntax structure of a virtual channel table according to the present invention;

FIG. 4 illustrates one example of a syntax structure of a channel type descriptor in a virtual channel table of FIG. 3;

FIG. 5 illustrates one example of a syntax structure of a program association table according to the present invention;

FIG. 6 is a block diagram illustrating a method for providing VOD service according to one embodiment of the present invention; and

FIG. 7 is a block diagram illustrating an apparatus for providing VOD service according to another embodiment of the present invention.

### DETAILED DESCRIPTION OF THE INVENTION

Reference will now be made in detail to the preferred embodiments of the present invention, examples of which are illustrated in the accompanying drawings. The drawings and the constitution and the operation of the present invention described by the drawings are exemplary and explanatory and the technical spirit of the present invention and its subject constitution and operation are not limited by the drawings.

Wherever possible, the same reference numbers will be used throughout the drawings to refer to the same or like parts. It is to be noted that only portions required for understanding of the operation according to the present invention will be described and that other portions will be omitted so as not to distract the subject matter of the present invention.

Although general terms which are currently widely used are selectively used within the limits of the possible in the present invention, terms optionally selected by the applicant will be used in specific cases, wherein their meaning will be defined and described in detail in the corresponding detailed description of the present invention. Accordingly, the terms used in the present invention should be understood as their meaning.

According to one embodiment of the present invention for VOD service, if a transmission frequency of a VOD channel is varied, the varied transmission frequency is updated to update a channel map of a receiving system, thereby allowing a user to detect TSID by scanning a transmission frequency band if the user advances to a standby mode later.

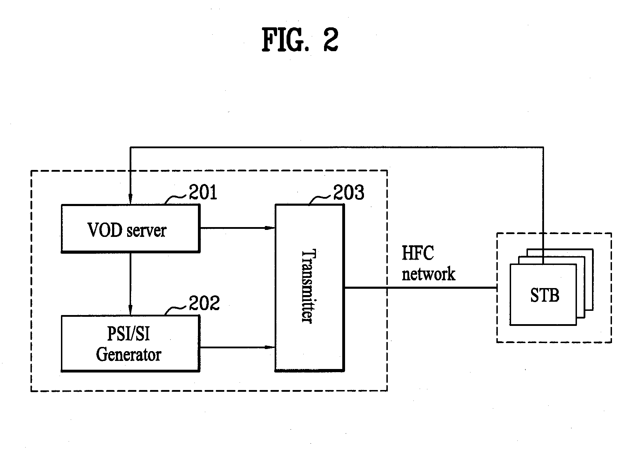

FIG. 2 is a block diagram illustrating a broadcasting system for VOD service according to one embodiment of the present invention.

Referring to FIG. 2, a transmitting party includes a VOD server 201, a program service information (PSI)/service information (SI) generator 202, and a transmitter 203.

The VOD server 201 receives a request for VOD service from a subscriber, and provides VOD contents selected by the subscriber. To this end, the VOD server 201 stores various contents in itself or a separate contents data base (not shown). Such VOD contents are compressed in a digital compression manner and then provided to the subscriber. For example, the VOD contents are compressed in an MPEG-2 manner like the current digital television broadcasting and then provided to the subscriber (set top box). However, since the MPEG-2 manner is exemplarily suggested, the VOD contents may be compressed in an MPEG-4, MPEG-7, MPEG-21, H.263, or H.264 manner. Also, examples of the VOD contents may include audio and data in addition to video.

The PSI/SI generator 202 generates service information in a table type, wherein the service information is required to allow the set top box to decode the VOD contents. For example, PSI tables are transmitted to the set top box through InBand while SI tables are transmitted to the set top box through out of band (OOB).

Examples of the table information that can be generated by the PSI/SI generator 202 include a program association table (PAT), a program map table (PMT), a network information table (NIT), and a virtual channel table (VCT).

The PAT is specific information transmitted by a packet having a packet identifier (PID) of ' 0' , and transmits PID information of corresponding PMT and PID information of NIT to each program. The PMT transmits PID information of a transport stream packet to which an individual bit row of video and audio constituting a program identification number and a program is transmitted, and PID information to which program clock reference (PCR) is transmitted. The NIT transmits information of an actual transmission network. The VCT transmits information of a virtual channel, for example, channel information for channel selection and information of a PID for receiving of A/V. In other words, if parsing of the VCT is performed, it is possible to recognize PID of audio and video of a broadcasting program along with a channel name and a channel number.

Each of the tables in the aforementioned PSI/SI generator has a basic unit called " section" , and one table is constituted by combination of sections more than one. For example, the VCT can be divided into 256 sections. Although one section may include information of various virtual channels, information of one virtual channel is not divided into two or more sections.

In other words, the PSI/SI is service information required to decode the VOD contents output from the VOD server 201.

The VOD contents output from the VOD server 201 and the service information output from the PSI/SI generator 202 are output to the transmitter 203.

The transmitter 203 modulates the VOD contents and the service information in a quadrature amplitude modulation (QAM) mode and then transmits the modulated information to each cell. Each cell is connected with at least one or more set top boxes. At this time, the transmission frequency to which the VOD contents are transmitted is managed by being divided per unit cell.

As one embodiment, the transmitter 103 transmits the contents to each cell through a hybrid fiber coaxial (HFC) network.

The HFC network includes an optical fiber and a coaxial cable, and is a wide band transmission network that can transmit various TV contents, bi-directional communication data and other control signals by using the optical fiber to a broadcasting station and an optical network unit (ONU) and using the coaxial cable from the ONU to the subscriber.

At this time, the receiving system which requests the VOD service, for example, the set top box should know its TSID to receive the VOD contents transmitted from the transmitting party. The TSID serves as position information of the set top box.

In other words, the set top box should know its TSID before requesting the VOD service, so that the set top box can receive the requested VOD contents.

In the present invention, if the transmission frequency to which the VOD contents are transmitted is varied, the TSID is detected after the channel map of the set top box is updated, whereby the set top box can receive the VOD service even in case that the transmission frequency is varied.

Next, a method for detecting TSID according to one embodiment of the present invention will be described in detail.

The transmitting party of the present invention updates the transmission frequency in a specific table of the PSI/SI generator, for example, the transmission frequency in the VCT, if the transmission frequency of the VOD contents for the VOD service is varied.

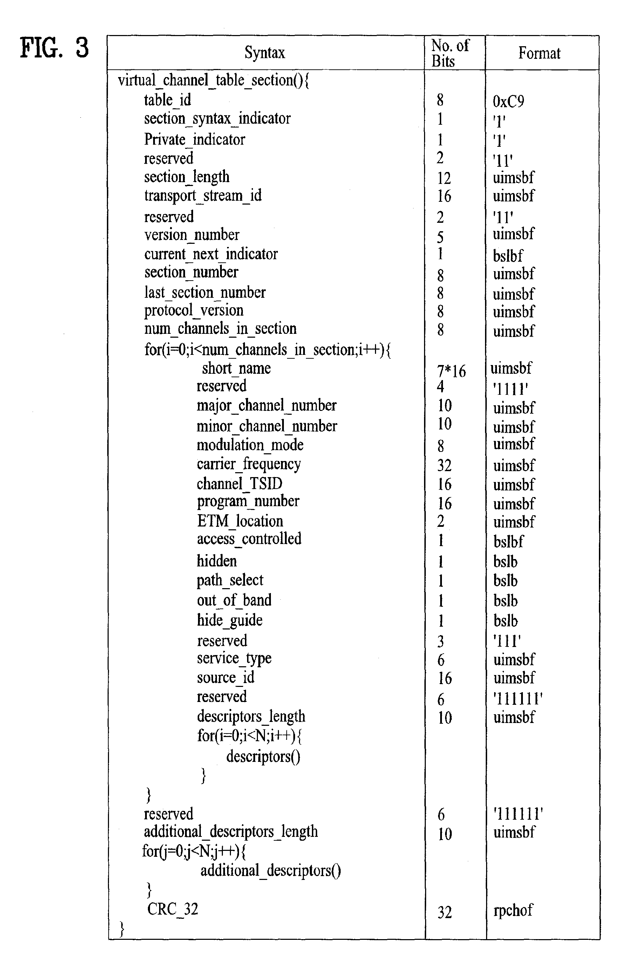

FIG. 3 illustrates one example of a syntax structure of the VCT that transmits the transmission frequency according to the present invention.

Referring to FIG. 3, a table id field represents a unique table identifier that can identify the syntax structure of the VCT.

A major_channel_number/minor_channel_number field in a repeat text of a loop 'for' repeated by the number of virtual channels included in the VCT represents a virtual major/minor channel number that indicates one of various virtual channels in a physical channel. A CDS_reference field represents a physical channel frequency of the virtual channel number. In other words, various virtual channels exist in a single physical channel, wherein one virtual channel corresponds to one broadcasting program. For example, if five virtual channels exist in a physical channel, it means that five broadcasting programs exist in the physical channel. The VOD contents according to the present invention are transmitted through one of the virtual channels.

A program number field represents a program number for connecting virtual channels in which an MPEG-2 PAT and a PMT are defined, and coincides with a program number in the PAT/PMT.

A carrier_frequency field represents a transmission frequency of contents transmitted to the virtual channels.

Accordingly, in the present invention, if the transmission frequency for transmitting VOD contents is varied, a value of a carrier_frequency field in the VCT is updated.

Then, the set top box that receives the VCT updates the channel map by parsing the VCT.

At this time, the transmitting party, for example, the PSI/SI generator 202 checks, through channel_type_descriptor() corresponding to one of descriptors included in the loop 'for' of the VCT, whether the carrier_frequency field is the transmission frequency for the VOD contents.

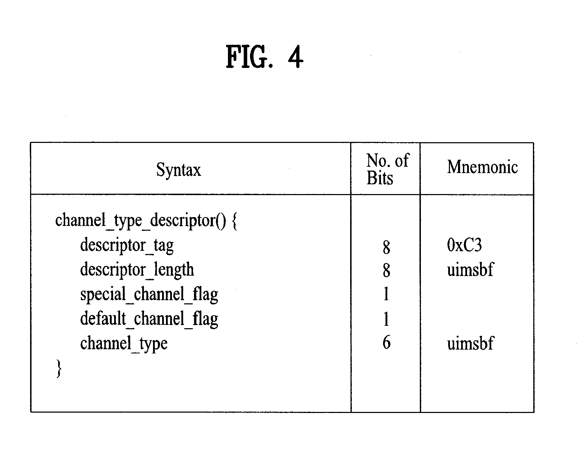

FIG. 4 illustrates one example of a syntax structure of the channel type descriptor, channel_type_descriptor() according to the present invention.

Referring to FIG. 4, a descriptor_tag field represents a unique descriptor identifier, which can identify that this descriptor is a channel type descriptor.

A channel type field represents whether a virtual channel corresponding to the descriptor is for either general A/V broadcasting or VOD service.

Accordingly, the PSI/SI generator 202 updates the value of the carrier_frequency field, which indicates that the channel_type field is a virtual channel for VOD service, to a transmission frequency value to be converted.

Meanwhile, if the transmission frequency of the received VCT is varied, i.e., if the carrier_frequency field value for VOD service in the VCT is varied, the set top box updates the channel map.

Afterwards, the set top box detects the TSID from the PAT by scanning the transmission frequency band stored in the channel map if it advances to the standby mode. Alternatively, the set top box detects the TSID through scanning when the user selects the VOD service if it does not advance to the standby mode until a certain time passes. At this time, the set top box may display user information message indicating that the TSID is being extracted, so as to obtain an extractive time of the TSID.

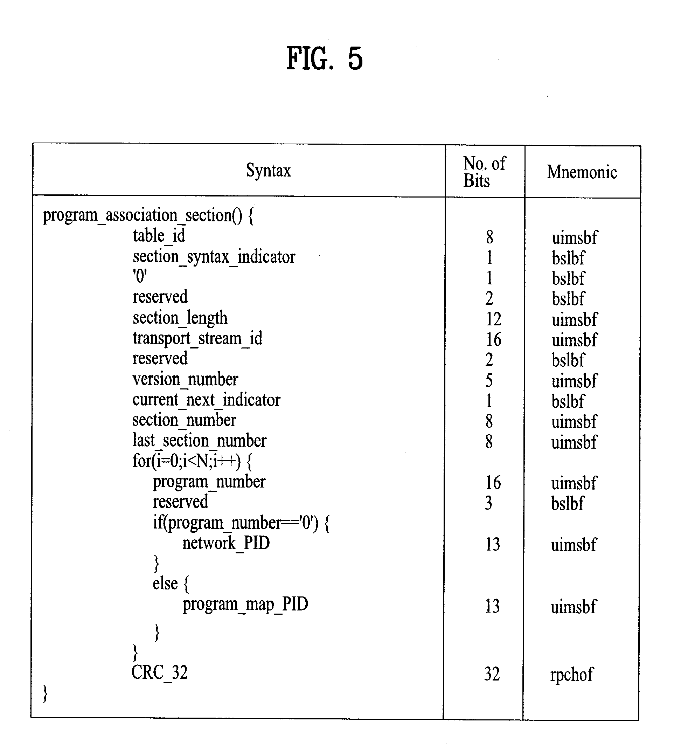

FIG. 5 illustrates one example of a syntax structure of the PAT which transmits the TSID.

Referring to FIG. 5, a table ID field represents a unique table identifier, which can identify that this syntax is the PAT.

The TSID detected in the present invention is described in a transport_stream_id field disposed next to a section_length field.

In the present invention, when the TSID is detected from the PAT, parsing of the PMT is omitted. To this end, the set top box is previously set in hardware or software to omit parsing of the PMT when the TSID is detected for the VOD service.

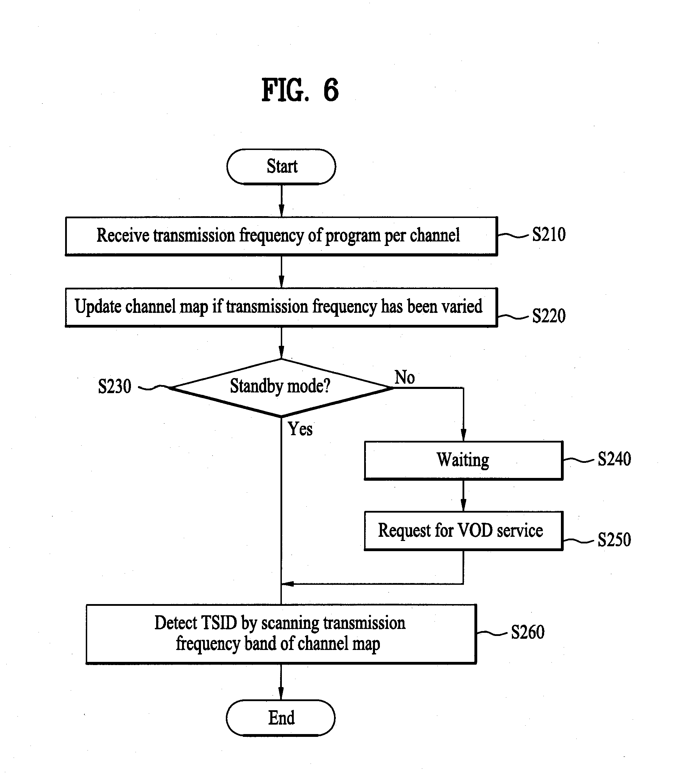

FIG. 6 is a block diagram illustrating a method for detecting the TSID of the set top box according to the present invention.

In other words, the transmission frequency of a program per channel, for example, the VCT is received (S210). At this time, if the transmission frequency of a program per channel in the VCT has been varied, the channel map is updated (S220). The transmission frequency may be allocated per channel or program.

Then, it is checked whether the set top box advances to the standby mode (S230). If the set top box advances to the standby mode, the set top box detects the TSID by scanning the transmission frequency listed in the channel map (S260).

Meanwhile, if the set top box does not advance to the standby mode until a certain time passes (S240), the set top box detects the TSID by scanning the transmission frequency listed in the channel map when the user requests the VOD service (S250, S260).

As one example, the TSID can be detected by parsing the transport_stream_id field in the PAT. At this time, parsing of the PMT using the PID of the PMT in the PAT is omitted.

According to another embodiment of the present invention for VOD service, identification information is transmitted to the transmitting party by using a cable modem fixed to the set top box, so that the transmitting party can transmit VOD contents by acquiring TSID available for the corresponding set top box.

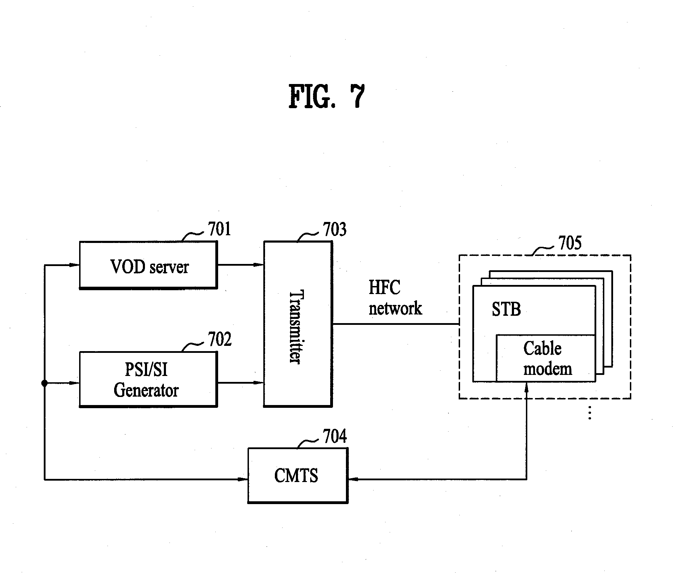

FIG. 7 is a block diagram illustrating an apparatus for providing VOD service according to another embodiment of the present invention. Referring to FIG. 7, the apparatus for providing VOD service includes a VOD server 701, a PSI/SI generator 702, a transmitter 703, a cable modem termination system (CMTS) 704, and at least one or more cells 705. At least one or more set top boxes are connected to the respective cells. In this case, the transmission frequency to which VOD contents are transmitted is managed by being divided per unit cell.

The CMTS 704 is a cable modem head-end, and serves to convert cable modem data into an Internet data packet. The CMTS 704 provides several functions such as routing for loading local data in a cable system, filtering for protecting cable operators from unwanted hacking, and traffic routing for ensuring service quality for a subscriber.

The VOD server 701 receives a VOD request from the subscriber and provides VOD contents selected by the subscriber.

Also, the VOD server 701 manages subscriber related information. For example, the VOD server 701 stores identification information of the set top box, wherein the identification information is transmitted through the cable modem from the set top box and received through the CMTS 704. In this case, the identification information of the set top box may be either an Internet protocol (IP) address or a medium access control (MAC) address, which is given to the corresponding set top box.

The CMTS 704 acquires position information available for the set top box, i.e., the TSID when outputting the identification information transmitted through the cable modem of the set top box to the VOD server 701. Thus, the CMTS 704 outputs the identification information to the VOD server 701 along with the acquired TSID.

The VOD server 701 together stores the identification information of the set top box and the TSID therein.

Afterwards, if the user requests the VOD service through the set top box, the VOD server 701 outputs the VOD contents and the TSID available for the set top box to the transmitter 703. In this case, the VOD server 701 knows the TSID of the set top box which has requested the VOD service.

Furthermore, the PSI/SI generator 702 outputs at least one of the NIT, the VCT, and the PAT, for example, the VCT to the transmitter 703, wherein the VCT includes the transmission frequency corresponding to the TSID. At this time, the PSI/SI generator 702 can control the transmission frequency of the transmitter 703.

The transmitter 703 modulates the VOD contents output from the VOD server 701 into the transmission frequency corresponding to the TSID of the set top box which has requested the VOD service, and transmits the modulated transmission frequency to a corresponding cell. In this case, various modulation modes may be used, and, among them, a QAM mode will exemplarily be described in the present invention.

By doing so, the set top box can receive the requested VOD contents without scanning and updating of the channel map.

As described above, the apparatus and method for providing VOD service according to the present invention have the following advantages.

The set top box can normally receive the VOD service even in case that the transmission frequency for transmitting the VOD contents is varied.

Also, since parsing of the PMT is omitted when the position information is extracted, it is possible to reduce the extractive time of the position information.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for providing video on demand (VOD) service of a receiving system, comprising:
updating a channel map if a transmission frequency included in received service information is varied; and
extracting and storing transport stream identifier (TSID) by scanning a transmission frequency band of the channel map.

2. The method as claimed in claim 1, wherein the received transmission frequency is included in a virtual channel table of the service information.

3. The method as claimed in claim 2, wherein a transmission frequency in a virtual channel indicating a VOD channel is varied in a channel type descriptor of the virtual channel table.

4. The method as claimed in anyone of claims 1 to 3, wherein the transport stream identifier is extracted from a program association table of the service information.

5. The method as claimed in claim 4, wherein parsing of a program map table is omitted when the transport stream identifier is extracted.

6. The method as claimed in anyone of claims 1 to 5, wherein scanning of the transmission frequency band of the channel map is performed in a standby mode.

7. The method as claimed in anyone of claims 1 to 6, wherein scanning of the transmission frequency band of the channel map is performed in case of a request for VOD service.

8. An apparatus for providing VOD service, comprising:
a receiving system updating a channel map if a transmission frequency included in received service information is varied, and extracting a transport stream identifier (TSID) by scanning a transmission frequency band of the channel map if a previously set condition is satisfied;
a VOD server outputting VOD contents requested from the receiving system;
a service information generator generating service information for decoding the VOD contents; and
a transmitter modulating the VOD contents output from the VOD server and transmitting the modulated VOD contents to the receiving system through a transmission network.

9. The apparatus as claimed in claim 8, wherein the transmission network is a hybrid fiber coaxial (HFC) network.

10. The apparatus as claimed in claim 8 or 9, wherein the transmission frequency is included in a virtual channel table of the service information, and the transport stream identifier is extracted from a program association table of the service information.

11. The apparatus as claimed in anyone of claims 8 to 10, wherein scanning of the transmission frequency band of the channel map is performed in a standby mode or in case of a request for VOD service.

12. The apparatus as claimed in anyone of claims 8 to 11, wherein the service information generator varies a transmission frequency in a virtual channel indicating a VOD channel in a channel type descriptor of the virtual channel table.

13. An apparatus for providing VOD service, comprising:
a receiving system having a cable modem, transmitting previously allocated identification information through a cable modem, and requesting VOD contents;
a CMTS acquiring identification information of the receiving system and a transport stream identifier available for the receiving system through communication with the cable modem of the receiving system;
a VOD server storing the identification information and the transport stream identifier acquired by the CMTS and outputting the VOD contents requested from the receiving system and corresponding transport stream identifier;
a service information generator generating service information for decoding the VOD contents; and
a transmitter modulating the VOD contents output from the VOD server into a transmission frequency of a corresponding transport stream identifier and transmitting the modulated transmission frequency to the receiving system through a transmission network.

14. The apparatus as claimed in claim 13, wherein the identification information allocated to the receiving system is either an internet protocol (IP) address or a medium access control (MAC) address.

15. The apparatus as claimed in claim 13 or 14, wherein the transmission network is a hybrid fiber coaxial (HFC) network.

16. The apparatus as claimed in anyone of claims 13 to 15, wherein the transmitter modulates the VOD contents in a quadrature amplitude modulation (QAM) mode.
